# EUROPÄISCHE PATENTANMELDUNG

(11) **EP 4 555 849 A1**
(43) Veröffentlichungstag der Anmeldung: **21.05.2025**
(21) Anmeldenummer: 24203510.3
(22) Anmeldetag: 30.09.2024
(51) Int. Cl.: A01D 41/12, A01F 12/44, F16J 15/52

(54) **SELBSTFAHRENDER MÄHDRESCHER MIT TEXTILABDICHTUNG FÜR DEN LAGERSTAB DES SIEBS DER REINIGUNGSVORRICHTUNG**

(30) Priorität: 14.11.2023 DE 102023131630
(71) Anmelder: CLAAS Selbstfahrende Erntemaschinen GmbH, 33428 Harsewinkel (DE)
(72) Erfinder: Pölling, Benedikt, 48727 Billerbeck (DE); Lehmberg, Andreas, 33428 Harsewinkel (DE)
(74) Vertreter: CLAAS Gruppe

(57) **Zusammenfassung**

Die Erfindung betrifft einen selbstfahrender Mähdrescher (1), umfassend eine von seitlichen Wandungen (25) zumindest abschnittsweise umgebene Reinigungsvorrichtung (13) mit zumindest einem oszillierend angetriebenen Sieb (19,20) und zumindest einer Verschwenkvorrichtung (32) zur gleichmäßigen Verteilung von Ernteguts auf dem zumindest einen Sieb (19, 20), wobei an dem zumindest einen Sieb (19, 20) ein in Querrichtung (y) des Mähdreschers (1) orientiertes, im Wesentlichen stangenförmig oder stabförmig ausgebildetes Bauteil (33, 46) ortsfest angeordnet ist, das sich durch eine Öffnung (35) der Wandung (25) abschnittsweise hindurch erstreckt und dessen freies Ende einen Angelpunkt bildet, wobei das sich mit dem zumindest einen Sieb (19, 20) oszillierend bewegende Bauteil (33, 46) gegenüber der Öffnung (35) durch ein Dichtungselement (42) abgedichtet ist, wobei das Dichtungselement (42) als Textildichtung (43) ausgebildet ist, die das oszillierend bewegende Bauteil (33, 46) umschließt.

## Beschreibung

Die Erfindung betrifft einen selbstfahrenden Mähdrescher gemäß dem Oberbegriff des Anspruchs 1.

Ein Mähdrescher der eingangs genannten Art ist aus der DE 10 2019 125 489 A1 bekannt. Dort ist ein selbstfahrender Mähdrescher mit von seitlichen Wandungen zumindest abschnittsweise umgebene Reinigungsvorrichtung offenbart, die mit zumindest einem oszillierend angetriebenen Sieb und zumindest einer Verschwenkvorrichtung zur gleichmäßigen Verteilung von Ernteguts auf dem zumindest einen Sieb ausgeführt ist. An dem zumindest einen Sieb sind in Querrichtung des Mähdreschers orientierte, im Wesentlichen stangenförmig oder stabförmig ausgebildete Bauteile ortsfest angeordnet, die sich durch Öffnungen einer Wandung abschnittsweise hindurch erstrecken und deren freien Enden einen Angelpunkt bilden. Die jeweilige Öffnung entspricht dabei im Wesentlichen einem Langloch mit ovaler Kontur. Die ortsfest an dem zumindest einen Sieb angeordneten Bauteile führen gegenüber der Öffnung Bewegungen in Längsrichtung, Querrichtung und Hochrichtung relativ zu den Wandungen aus. Insbesondere die Bewegungen in Querrichtung erfolgen sowohl in positiver als auch negativer Richtung der Wandungen. Die Öffnungsweite der Öffnungen in den Wandungen ist derart, dass die Bewegungen störungsfrei ausgeführt werden können. Zudem werden durch die gewählte Öffnungsweite der Öffnungen Fertigungstoleranzen in Längsrichtung, Querrichtung der Reinigungsvorrichtung berücksichtigt. Mit den Öffnungen im Maschinengehäuse geht einher, dass Erntegut durch diese hindurchtreten kann und sich unter anderem im Bereich der Verschwenkvorrichtung ablagert.

Aus der DE 42 15 239 C1 ist eine Dichtung zum Abdecken einer Öffnung in einem die Reinigungsvorrichtung umgebenden Maschinengehäuse bekannt, durch welche ein oszillierend angetriebener Schwingungsarm, der mit einem Ende am Sieb einer Reinigungsvorrichtung und mit einem anderen Ende am Maschinengehäuse angelenkt ist, geführt ist. Die den Schwingungsarm umschließende Dichtung bewegt sich zusammen mit dem Sieb, an dem die Dichtung befestigt ist. Damit die oszillierenden Bewegungen in Längsrichtung und Hochrichtung des Schwingungsarmes störungsfrei ausgeführt werden, weist die Dichtung eine größere Fläche auf als die Öffnung. Die Dichtung gleitet dabei auf der Oberfläche des Maschinengehäuses. Mit dieser Lösung zur Abdichtung der Öffnung gehen wesentliche Nachteile einher, zum einen ein erhöhter Verschleiß der Dichtung, dem im abrasiven Umfeld im Inneren des Mähdreschers durch die Materialauswahl nur begrenzt begegnet werden kann und zum anderen die Anordnung am Sieb, welche bei einem erforderlichen verschleißbedingten Austausch der Dichtung mit großem Aufwand verbunden ist. Ein weiterer Nachteil besteht darin, dass es bei einer Bewegung in Querrichtung auf einer Seite des Siebes zu einer Beabstandung der Dichtung gegenüber dem Maschinengehäuse kommt, was mit einer Spaltbildung einhergeht, sodass Erntegut hindurchtreten kann.

Ausgehend vom vorstehend genannten Stand der Technik liegt der Erfindung die Aufgabe zugrunde, einen selbstfahrenden Mähdrescher der eingangs genannten Art weiterzubilden, der die Nachteile des Standes der Technik vermeidet, insbesondere eine verbesserte Abdichtung, die spaltfreie Bewegungen eines Siebes relativ zum Maschinengehäuse in Querrichtung ermöglicht.

Diese Aufgabe wird erfindungsgemäß durch die kennzeichnenden Merkmale des Anspruchs 1 gelöst.

Gemäß dem Anspruch 1 wird ein selbstfahrender Mähdrescher, umfassend eine von seitlichen Wandungen zumindest abschnittsweise umgebene Reinigungsvorrichtung mit zumindest einem oszillierend angetriebenen Sieb und zumindest einer Verschwenkvorrichtung zur gleichmäßigen Verteilung von Ernteguts auf dem zumindest einen Sieb vorgeschlagen, wobei an dem zumindest einen Sieb ein in Querrichtung des Mähdreschers orientiertes, im Wesentlichen stangenförmig oder stabförmig ausgebildetes Bauteil ortsfest angeordnet ist, das sich durch eine Öffnung der Wandung abschnittsweise hindurch erstreckt und dessen freies Ende einen Angelpunkt bildet, wobei das sich mit dem zumindest einen Sieb oszillierend bewegende Bauteil gegenüber der Öffnung durch ein Dichtungselement abgedichtet ist, dadurch gekennzeichnet, dass das Dichtungselement als Textildichtung ausgebildet ist, die das oszillierend bewegende Bauteil umschließt.

Die Erfindung hat viele Vorteile. Die Textildichtung weist gegenüber einer Dichtung aus Gummi eine geringere Dichte auf, sodass durch die ständigen Richtungswechsel des oszillierend bewegenden Bauteils in der Textildichtung geringere Impulse wirken. Weiterhin weist die Textildichtung eine sehr geringe Formstabilität auf. Mithin kann die Textildichtung der Bewegung des Halters besonders gut folgen und ist somit besonders langlebig. Vorzugsweise kann die Textildichtung als Gewebestruktur ausgebildet sein. Eine Gewebestruktur umfasst mehrere miteinander verwebte Fäden und bildet somit eine elastische und leicht verformbare Struktur, die der Bewegung des Bauteils besonders gut durch ihre Verformbarkeit folgen kann.

Vorzugsweise kann die Textildichtung elastisch verformbar sein. Hierdurch kann das Bauteil an dem Sieb bei der Montage der Textildichtung verbleiben. Die Textildichtung kann auf einfache Art und Weise über das dem Sieb abgewandte, leichter zugängliche Ende des Bauteils gestülpt werden. Hierdurch ist die Textildichtung auch als Nachrüstlösung geeignet.

Zur Abdichtung der Öffnung durch die das Bauteil hindurchragt kann vorgesehen sein, dass die Textildichtung einends statisch an der Verschwenkvorrichtung und anderends an dem oszillierend bewegenden Bauteil angeordnet ist.

Eine vorteilhafte Weiterbildung sieht vor, dass die Verschwenkvorrichtung eine Tragseite aufweist, die flächig an der Wandung aufliegt, wobei an der Tragseite eine Konsole mit einer Bördelkulisse angeordnet ist, wobei die Textildichtung einends in der Bördelkulisse eingespannt ist. Durch die Eigenspannung der Textildichtung sind keine weiteren Mittel zur Halterung der Textildichtung in der Bördelkulisse erforderlich.

Hierbei ist es besonders bevorzugt, wenn die Konsole zweiteilig ausgeführt ist, wobei vorzugsweise die zwei Konsolenteile das Bauteil jeweils halbseitig umschließen. Die Zweiteiligkeit ermöglicht eine besonders einfache Montage der Konsole, sodass für die Anordnung der Konsolenteile an der Tragseite der Verschwenkvorrichtung keine Demontage des Bauteils von dem Sieb erforderlich ist.

Eine vorteilhafte Weiterbildung sieht vor, dass die Konsolenteile jeweils mit einer Schraubverbindung an der Tragseite angeordnet sind.

Zur Befestigung des Dichtungselements an dem oszillierenden Bauteil kann vorzugsweise ein Klettverschluss, Kabelbinder oder Gummizug vorgesehen sein.

Eine vorteilhafte Weiterbildung sieht vor, dass das Dichtungselement derart angeordnet ist, sodass sich bei einer Bewegung des Bauteils das Dichtungselement abschnittsweise faltet und in einer Endlage des Bauteils elastisch verformt ist. Das elastische Verformen bzw. Strecken der Textildichtung wirft etwaige auf der Textildichtung liegende Körner zurück durch die Öffnung. Demgemäß wird Materialablagerungen in der Textildichtung entgegengewirkt.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Seitenansicht einer als Mähdrescher ausgeführten selbstfahrenden Erntemaschine;
- Figur 2: eine Ansicht einer an einem oberen Siebkasten einer Reinigungsvorrichtung des Mähdreschers angeordneten Verschwenkvorrichtung, welche mittels einer Haltevorrichtung am Maschinengehäuse des Mähdreschers angeordnet ist;
- Figur 3: eine schematische Schnittansicht eines Teils der Verschwenkvorrichtung gemäß Fig. 2;
- Figur 4: eine perspektivische Ansicht einer Konsole mit einer Bördelkulisse zur Halterung der Textildichtung;
- Figur 5: eine perspektivische Ansicht einer Textildichtung zur Abdichtung einer Öffnung in einer Wandung durch die sich ein oszillierend bewegendes Bauteil der Verschwenkvorrichtung erstreckt.

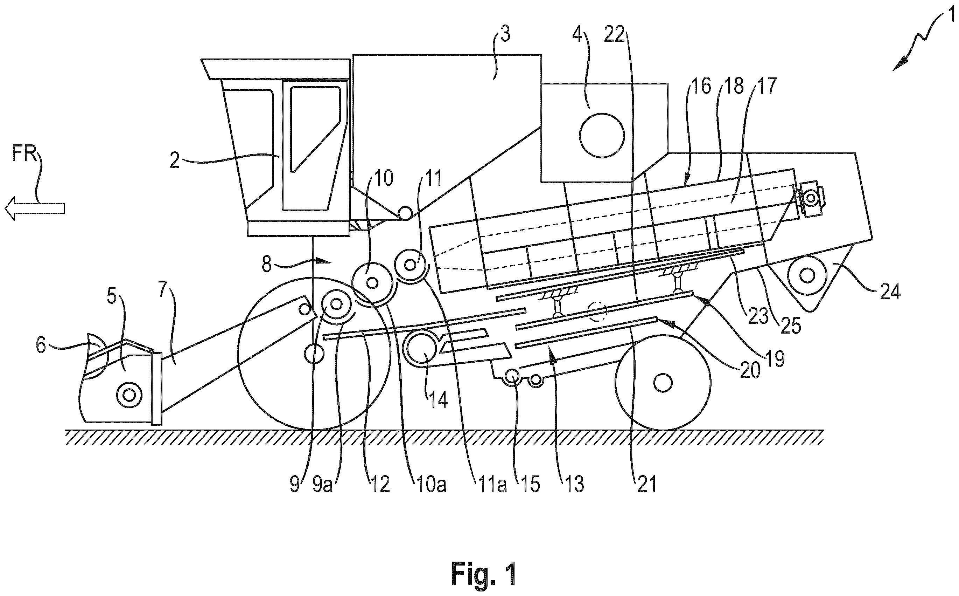

In Fig. 1 ist schematisch eine Seitenansicht eines selbstfahrenden Mähdreschers 1 dargestellt, der eine Fahrerkabine 2, einen hinter dieser liegenden Korntank 3 sowie anschließend an diesen einen Verbrennungsmotor 4 aufweist. Weiterhin nimmt der selbstfahrende Mähdrescher 1 in seinem Frontbereich einen Erntevorsatz 5 auf. Der Erntevorsatz 5 erfasst das zu erntende Halmgut mit einer Haspel 6 und schneidet es mittels einer nicht dargestellten Mähvorrichtung bodennah ab. Das Erntegut gelangt vom Erntevorsatz 5 durch einen Schrägförderer 7 zu einer Dresch- und Trenneinrichtung 8. Diese Dresch- und Trenneinrichtung 8 ist als Mehrtrommelanordnung eines Tangentialdreschwerks ausgebildet und besteht aus einer Vorbeschleunigungstrommel 9, einer Dreschtrommel 10 und einer Zuführtrommel 11. Diesen Trommeln 9, 10 und 11 sind jeweils Abscheidekörbe 9a, 10a und 11a zugeordnet. Das ausgedroschene Erntegut gelangt durch die Abscheidekörbe 9a, 10a und 11a auf einen Vorbereitungsboden 12. Vom Vorbereitungsboden 12 wird das ausgedroschene Erntegut einer Reinigungsvorrichtung 13 zugeführt. Die Reinigungsvorrichtung 13 umfasst ein Reinigungsgebläse 14 sowie ein Obersieb 19 und ein Untersieb 20, die jeweils oszillierend angetrieben sind. Das Obersieb 19 ist in einem oberen Siebkasten 22, das Untersieb 20 in einem unteren Siebkasten 21 angeordnet. Das Reinigungsgebläse 14 wirkt mit dem Obersieb 19 und dem Untersieb 20 zusammen, welches im Bereich der Siebe einen Luftstrom erzeugt, wodurch Spreu und Kurzstroh abgeschieden und aus dem Mähdrescher 1 herausbefördert werden. Das durch die Siebe 19, 20 der Reinigungsvorrichtung 13 hindurchtretende gereinigte Erntegut gelangt in eine Querförderschnecke 15, die das Erntegut zu einem mit dem Korntank 3 verbundenen, nicht dargestellten Körnerelevator transportiert.

Sämtliche Anteile des Ernteguts, welches die Abscheidekörbe 9a, 10a und 11a nicht in Richtung des Vorbereitungsbodens 12 passiert haben und bei denen es sich um Stroh, Kurzstroh, Ähren und gegebenenfalls Grannen handelt, werden mittels der Zuführtrommel 11 einer Einrichtung 16 zur Restkornabscheidung zugeführt. Diese Einrichtung 16 zur Restkornabscheidung weist bei dem in der Fig. 1 dargestellten Mähdrescher 1 einen in Längsrichtung des Mähdreschers 1 verlaufenden Trennrotor 17 auf. In einer alternativen Ausführung kann der Mähdrescher 1 jedoch auch mit Hordenschüttlern als Einrichtung 16 zur Restkornabscheidung ausgeführt sein. Der Trennrotor 17 ist weiterhin radial von einem Abscheidegehäuse 18 umschlossen, welches in seinem unteren Bereich nicht näher dargestellte Abscheideöffnungen aufweist und im oberen Bereich geschlossen, also undurchlässig ist. Durch die Abscheideöffnungen des Abscheidegehäuses 18 gelangen Restkorn, Spreu, Ähren und eventuell Kurzstroh auf einen Rücklaufboden 23, der diese Bestandteile der Reinigungseinrichtung 13 zuführt. Die Bestandteile dieses Erntegutstromes, die von den Sieben 19, 20 der Reinigungsvorrichtung 13 abgeschieden werden, gelangen in eine Förderschnecke, die diese Bestandteile des Ernteguts einer an sich bekannten und daher nicht näher dargestellten Überkehr zuführt. Die Überkehr fördert diese Bestandteile des Ernteguts zurück in die Dresch- und Trenneinrichtung 8. Das durch den Trennrotor 17 geförderte Stroh verlässt diesen an dessen hinterem Ende, wo das Stroh in einen Strohhäcksler 24 gelangt oder als Schwad auf dem Boden abgelegt werden kann. Die Arbeitsaggregate des Mähdreschers 1 sind von einem Maschinengehäuse umgeben.

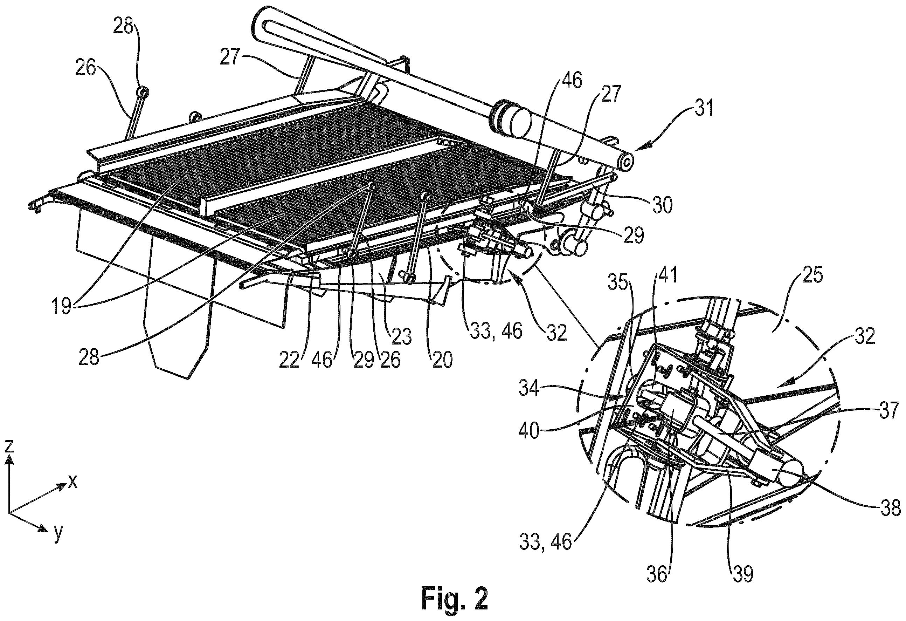

In Fig. 2 ist eine Ansicht einer an dem oberen Siebkasten 22 der Reinigungsvorrichtung 13 des Mähdreschers 1 angeordneten Verschwenkvorrichtung 32 dargestellt, welche mittels einer Haltevorrichtung 34 an einer seitlichen Wandung 25 im Innern des Mähdreschers 1 angeordnet ist. Die einander gegenüberliegenden seitlichen Wandungen 25 umgeben die Reinigungsvorrichtung 13 zumindest abschnittsweise. Fig. 2 zeigt den oberen Siebkasten 22, welcher das Obersieb 19 haltert und den unteren Siebkasten 21, welcher das Untersieb 20 haltert. Der obere Siebkasten 22 ist an vorderen Schwenkelementen 26 und hinteren Schwenkelementen 27 aufgehängt, die jeweils mit ihren oberen Enden mittels an den Wandungen 25 gekoppelten Halterungen 28 frei schwenkbar gelagert sind und an ihren unteren Enden mittels Gelenkbauteilen 29 ebenfalls um stangenförmig oder stabförmig ausgebildete Bauteile 46 frei schwenkbar am oberen Siebkasten 22 gelagert sind. Der untere Siebkasten 21 kann in vergleichbarer Weise aufgehängt sein. Die Bauteile 46 sind ortsfest am oberen Siebkasten 22 angeordnet. Die Bauteile 46, an denen die vorderen Schwenkelemente 26 und die hinteren Schwenkelemente 27 angelenkt sind, sind im Wesentlichen zapfenförmig ausgebildet. Eine Kurbelstange 30 verbindet den oberen Siebkasten 22 mit einem an sich bekannten und daher nicht näher erläuterten Exzenterantrieb 31. Mittels des Exzenterantriebs 31 wird das Obersieb 19 zum hin- und herschwingen angeregt.

Die Verschwenkvorrichtung 32 weist einen Halter 33 auf, der ortsfest mit dem oberen Siebkasten 22 verbunden ist. Der Halter 33 stellt ein im Wesentlichen stangenförmig oder stabförmig ausgebildetes Bauteil 46 dar, welches ortsfest am oberen Siebkasten 22 angeordnet ist. Die vergrößert dargestellte Detailansicht zeigt die Verschwenkvorrichtung 32 und einen Ausschnitt des Maschinengehäuses, an dem die Verschwenkvorrichtung 32 mittels der Haltevorrichtung 34 mittelbar oder unmittelbar angeordnet ist. Die Verschwenkvorrichtung 32 ist an einer der seitlichen Wandungen 25 angeordnet. Bei den seitlichen, d.h. sich in Fahrtrichtung FR erstreckenden, Wandungen 25 kann es sich um einen Abschnitt des Maschinengehäuses handeln.

Die Haltevorrichtung 34 weist eine flächige Tragseite 40 mit einer mittig auf dieser befindlichen im Wesentlichen ovale Öffnung 41 auf. Die Tragseite 40 ist ortsfest an der seitlichen Wandung 25 angeordnet, beispielsweise mittels einer Schraubverbindung.

Der Halter 33 der Verschwenkvorrichtung 32 ist an einem Ende ortsfest mit einer sich im Wesentlichen in Fahrtrichtung FR erstreckenden Längsseite des oberen Siebkastens 22 verbunden, beispielsweise mittels einer Schraubverbindung. In der Wandung 25 ist eine als Langloch ausgebildete, insbesondere im Wesentlichen ovale, Öffnung 35 vorgesehen, durch welche der Halter 33 nach außen ragt. Hierzu ist die Öffnung 41 der Haltevorrichtung 24 die Öffnung 35 überlagernd angeordnet. Das freie Ende des Halters 33, welches durch die Öffnung 35 in der Wandung 25 und die Öffnung 41 der Tragseite 40 hindurchragt, ist mittels eines Gelenkbauteils 36, insbesondere eines Metallgummilagers, an einem Ende einer Schwenkstange 37 drehbeweglich angeordnet. Das Gelenkbauteil 36 erlaubt eine Drehbewegung des Halters 33 gegenüber der Schwenkstange 37 mit im Wesentlichen drei rotatorischen Freiheitsgraden. Die Schwenkstange 37 ist wiederum mit ihrem gegenüberliegenden Ende drehbeweglich mittels eines zweiten Gelenkbauteils 38, welches ebenfalls bevorzugt als Metallgummilager ausgeführt ist, an einer mehrteilig ausgeführten Schwenkgabel 39 angeordnet. Details zur Ausgestaltung und Funktionsweise der Verschwenkvorrichtung 32 sind der DE 10 2019 125 489 A1 zu entnehmen, die vollumfänglich in den Offenbarungsgehalt der vorliegenden Anmeldung einbezogen wird.

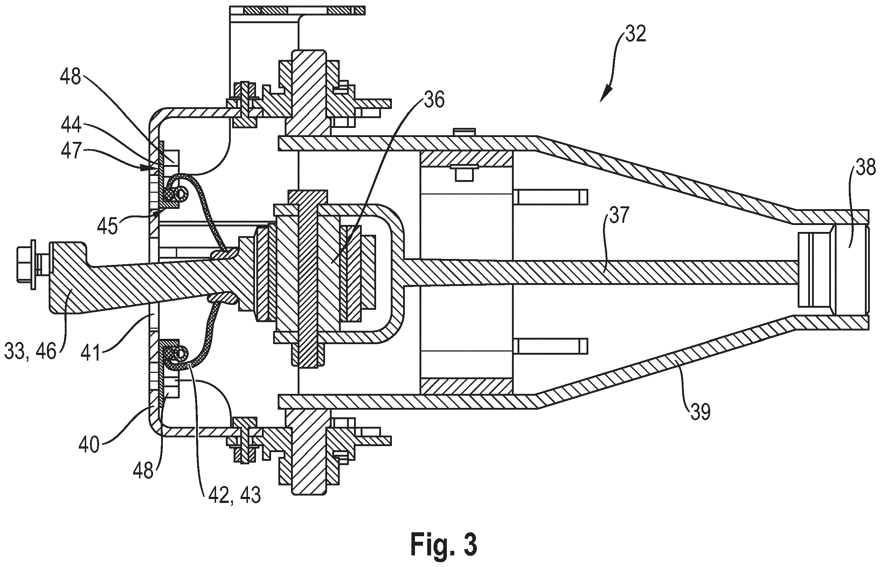

In Fig. 3 ist eine schematische Schnittansicht eines Teils der Verschwenkvorrichtung 32 gemäß Fig. 2 dargestellt. Das Dichtungselement 42 dient dazu, die Öffnung 41 in der Tragseite 40 sowie die in Fig. 2 näher dargestellte, dahinter befindliche Öffnung 35 in der Wandung 25 abzudichten. Dabei muss gewährleistet sein, dass das Dichtungselement 42 den oszillierenden Bewegungen des Halters 33 folgen kann. Der Halter 33 führt schwingende Bewegungen in Längsrichtung x, Querrichtung y sowie z-Richtung aus.

Hierzu besteht das Dichtungselement 42 aus einer elastisch verformbaren Textildichtung 43. Die Textildichtung 43 umschließt den im Betriebszustand des Mähdreschers 1 oszillierend bewegenden Halter 33 sackförmig, sodass die Öffnung 35 in der seitlichen Wandung 25 und die Öffnung 41 in der Tragseite 40 abgedichtet sind. Die Textildichtung 43 verhindert, dass ausgedroschene Körner aus der Reinigungsvorrichtung 13 durch die Öffnungen 35 und 41 austreten.

Die Textildichtung 43 ist als Gewebestruktur bestehend aus mehreren gewebten Fäden ausgebildet. Eine derartige Textildichtung 43 weist gegenüber einer Dichtung aus Gummi eine geringere Dichte auf, sodass durch die ständigen Richtungswechsel des oszillierend bewegenden Halters 33 in der Textildichtung 43 geringere Impulse wirken. Weiterhin weist die Textildichtung eine sehr geringe Formstabilität auf. Mithin kann die Textildichtung der Bewegung des Halters in Längsrichtung x, Querrichtung y sowie z-Richtung besonders gut folgen und ist somit gegenüber den aus dem Stand der Technik bekannten Dichtungen langlebiger.

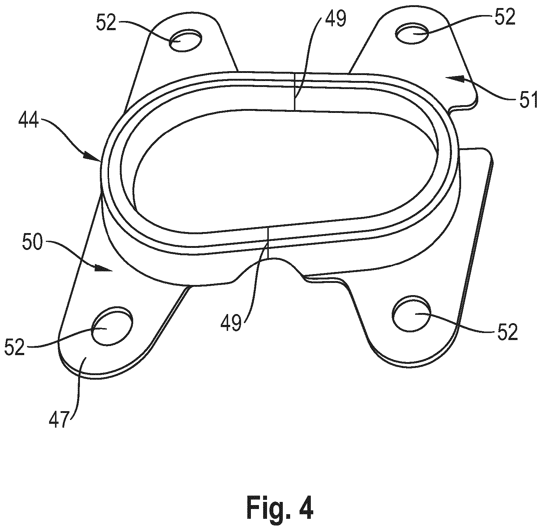

Die Textildichtung 43 ist einends statisch an der Verschwenkvorrichtung 32 und anderends an dem oszillierend bewegenden Halter 33 angeordnet. Hierfür ist an der Tragseite 40 eine in Fig. 3 schematisch dargestellte und in Fig. 4 in einer perspektivischen Ansicht abgebildete Konsole 44 mit einer Bördelkulisse 45 angeordnet. Die Konsole 44 umfasst einen flächigen Abschnitt 47 der an der Tragseite 40 der Verschwenkvorrichtung 32 anliegt und mittels einer Schraubverbindung 48 an dieser gehaltert ist. Die Konsole 44 umschließt den Halter 33. Weiterhin weist die Konsole 44 die Bördelkulisse 45 auf, welche radial außenseitig eine ringförmige Aussparung 48 ausbildet, wobei die Textildichtung 43 in der Aussparung 48 eingespannt ist. Hierfür ist die Textildichtung 43 über die Bördelkulisse 45 gestülpt. Hier und vorzugsweise ist die Konsole 44 zweiteilig ausgeführt. Fig. 4 zeigt die zwei Konsolenteile 50, 51 der Konsole 44 mit aneinander anliegenden Stirnseiten 49. Im montierten Zustand der Konsole 44 umschließen die zwei Konsolenteile 50, 51 den Halter 33 jeweils halbseitig. Weiterhin umfassen die flächigen Abschnitte 47 der Konsolenteile 50, 51 jeweils zur Befestigungen der Abschnitte 47 mittels einer Schraubverbindung 48 kreisrunde Aussparungen 52.

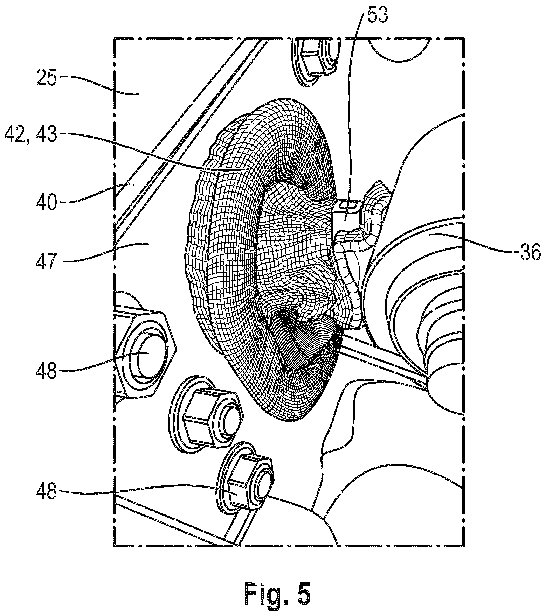

Wie Fig. 3 zeigt, kann der Halter 33 zwischen seinem am Obersieb 19 befestigten Ende und dem am gegenüberliegenden Ende angeordneten Gelenkbauteil 36 einen im Wesentlichen konisch verlaufenden Abschnitt aufweisen. Die Textildichtung 43 kann an dem Halter 33 mittels eines Klettverschluss, Kabelbinder 52 oder Gummizug befestigt sein. Besonders bevorzugt ist die Textildichtung 43 an dem Halter 33 im Bereich seines geringsten Außenumfangs angeordnet, sodass ein Verrutschen der Textildichtung 43 in Längsrichtung des Halters 33 durch den zunehmenden Außenumfang des Halters 33 begrenzt ist. Fig. 5 zeigt die Textildichtung 43 in einem montierten Zustand. In der hier dargestellten Ausführungsform ist die Textildichtung 43 mittels eines Kabelbinders 53 an dem Halter 33 befestigt.

Hier und vorzugsweise ist die Textildichtung 43 derart angeordnet, sodass sich bei einer Bewegung des Halters 33 die Textildichtung 43 abschnittsweise faltet und in einer Endlage des Halters 33 elastisch verformt ist. Das elastische Verformen bzw. Strecken der Textildichtung 43 wirft etwaige auf der Textildichtung 43 liegende Körner zurück durch die Öffnung 41 in die Reinigung. Demgemäß wird Materialablagerungen in der Textildichtung 43 entgegengewirkt.

**Bezugszeichenliste:**

| | | | |
|---|---|---|---|
| 1 | Mähdrescher | 31 | Exzenterantrieb |
| 2 | Kabine | 32 | Verschwenkvorrichtung |
| 3 | Korntank | 33 | Halter |
| 4 | Verbrennungsmotor | 34 | Haltevorrichtung |
| 5 | Erntevorsatz | 35 | Öffnung |
| 6 | Haspel | 36 | Gelenkbauteil |
| 7 | Schrägförderer | 37 | Schwenkstange |
| 8 | Dresch- und Trenneinrichtung | 38 | Gelenkbauteil |
| 9 | Vorbeschleunigungstrommel | 39 | Schwenkgabel |
| 9a | Abscheidekorb | 40 | Tragseite |
| 10 | Dreschtrommel | 41 | Öffnung |
| 10a | Abscheidekorb | 42 | Dichtungselement |
| 11 | Zuführtrommel | 43 | Textildichtung |
| 11a | Abscheidekorb | 44 | Konsole |
| 12 | Vorbereitungsboden | 45 | Bördelkulisse |
| 13 | Reinigungsvorrichtung | 46 | Ortsfestes Bauteil |
| 14 | Reinigungsgebläse | 47 | Flächiger Abschnitt |
| 15 | Querförderschnecke | 48 | Schraubverbindung |
| 16 | Einrichtung zur Restkornabscheidung | 49 | Stirnseite |
| 17 | Trennrotor | 50 | Konsolenteil |
| 18 | Abscheidegehäuse | 51 | Konsolenteil |
| 19 | Obersieb | 52 | Aussparung |
| 20 | Untersieb | 53 | Kabelbinder |
| 21 | Unterer Siebkasten | | |
| 22 | Oberer Siebkasten | | |
| 23 | Rücklaufboden | | |
| 24 | Strohhäcksler | | |
| 25 | Seitliche Wandung | | |
| 26 | Vorderes Schwenkelement | | |
| 27 | Hinteres Schwenkelement | | |
| 28 | Halterung | | |
| 29 | Gelenkbauteil | | |
| 30 | Kurbelstange | | |

## Patentansprüche

1. Selbstfahrender Mähdrescher (1), umfassend eine von seitlichen Wandungen (25) zumindest abschnittsweise umgebene Reinigungsvorrichtung (13) mit zumindest einem oszillierend angetriebenen Sieb (19,20) und zumindest einer Verschwenkvorrichtung (32) zur gleichmäßigen Verteilung von Ernteguts auf dem zumindest einen Sieb (19, 20), wobei an dem zumindest einen Sieb (19, 20) ein in Querrichtung (y) des Mähdreschers (1) orientiertes, im Wesentlichen stangenförmig oder stabförmig ausgebildetes Bauteil (33, 46) ortsfest angeordnet ist, das sich durch eine Öffnung (35) der Wandung (25) abschnittsweise hindurch erstreckt und dessen freies Ende einen Angelpunkt bildet, wobei das sich mit dem zumindest einen Sieb (19, 20) oszillierend bewegende Bauteil (33, 46) gegenüber der Öffnung (35) durch ein Dichtungselement (42) abgedichtet ist, **dadurch gekennzeichnet, dass** das Dichtungselement (42) als Textildichtung (43) ausgebildet ist, die das oszillierend bewegende Bauteil (33, 46) umschließt.

2. Selbstfahrender Mähdrescher (1) nach Anspruch 1, **dadurch gekennzeichnet, dass** die Textildichtung (43) als Gewebestruktur ausgebildet ist.

3. Selbstfahrender Mähdrescher (1) nach einem der Ansprüche 1 oder 2, **dadurch gekennzeichnet, dass** die Textildichtung (43) elastisch verformbar ist.

4. Selbstfahrender Mähdrescher (1) nach einem der Ansprüche 1 bis 3, **dadurch gekennzeichnet, dass** die Textildichtung (43) einends statisch an der Verschwenkvorrichtung (32) und anderends an dem oszillierend bewegenden Bauteil (33, 46) angeordnet ist.

5. Selbstfahrender Mähdrescher (1) nach einem der Ansprüche 1 bis 4, **dadurch gekennzeichnet, dass** die Verschwenkvorrichtung (32) eine Tragseite (40) aufweist, die flächig an der Wandung (25) aufliegt, wobei an der Tragseite (40) eine Konsole (44) mit einer Bördelkulisse (45) angeordnet ist, wobei die Textildichtung (43) einends in der Bördelkulisse (45) eingespannt ist.

6. Selbstfahrender Mähdrescher (1) nach Anspruch 5, **dadurch gekennzeichnet, dass** die Konsole (44) zweiteilig ausgeführt ist, wobei vorzugsweise die zwei Konsolenteile (50, 51) das Bauteil (33, 46) jeweils halbseitig umschließen.

7. Selbstfahrender Mähdrescher (1) nach Anspruch 6, **dadurch gekennzeichnet, dass** die Konsolenteile (50, 51) jeweils mit einer Schraubverbindung (48) an der Tragseite (40) angeordnet sind.

8. Selbstfahrender Mähdrescher (1) nach einem der Ansprüche 1 bis 7, **dadurch gekennzeichnet, dass** das Dichtungselement (42) an dem Bauteil (33, 46) mittels eines Klettverschlusses, Kabelbinders (53) oder Gummizugs befestigt ist.

9. Selbstfahrender Mähdrescher (1) nach einem der Ansprüche 1 bis 8, **dadurch gekennzeichnet, dass** das Dichtungselement (42) derart angeordnet ist, sodass sich bei einer Bewegung des Bauteils (33, 46) das Dichtungselement (42) abschnittsweise faltet und in einer Endlage des Bauteils (33, 46) elastisch verformt ist.
